# EUROPÄISCHE PATENTSCHRIFT

(11) **EP 2 404 368 B1**
(45) Veröffentlichungstag und Bekanntmachung des Hinweises auf die Patenterteilung: **06.06.2018**
(21) Anmeldenummer: 10709993.9
(22) Anmeldetag: 04.03.2010
(51) Int. Cl.: H02K 3/44, H02K 5/128, H02K 15/00, H02K 17/16, H02K 5/12, F04D 13/06

(54) **LÄUFER FÜR EINEN ELEKTROMOTOR UND VERFAHREN ZUR HERSTELLUNG EINES SOLCHEN LÄUFERS**
ROTOR FOR AN ELECTRIC MOTOR AND A PROCESS FOR PRODUCING SAID ROTOR
ROTOR POUR UN MOTEUR ÉLECTRIQUE ET PROCÉDÉ DE PRODUCTION D'UN TEL ROTOR

(30) Priorität: 06.03.2009 DE 102009012051
(43) Veröffentlichungstag der Anmeldung: 11.01.2012
(73) Patentinhaber: Siemens Aktiengesellschaft, 80333 München (DE)
(72) Erfinder: BIESENBACH, Martin, 40225 Düsseldorf (DE); BODE, Ralf, 47441 Moers (DE)
(86) Internationale Anmeldenummer: PCT/EP2010/052730
(87) Internationale Veröffentlichungsnummer: WO 2010/100214

(56) Entgegenhaltungen:
- EP-A2- 0 504 994
- EP-A2- 1 054 499
- WO-A1-2005/124973
- DE-B- 1 089 468
- DE-C1- 19 525 704
- DE-U1- 29 504 640

## Beschreibung

Die Erfindung betrifft ein Verfahren zur Herstellung eines Läufers für einen Elektromotor mit einem Metallkern, daran angeordneten elektrischen Leitern und einer den Metallkern und die Leiter umhüllenden metallischen Korrosionsschutzschicht. Außerdem betrifft die Erfindung ein Verfahren zum Herstellen eines Läufers für einen Elektromotor mit einem Metallkern und daran angeordneten elektrischen Leitern.

Industrielle Elektromotoren für hohe Drehzahlen, beispielsweise für einen Turbokompressor einer industriellen Anlage, enthalten einen massiven Rotor, welcher aus einem Stahlkörper und einem integrierten Käfig aus Kupferteilen, z. B. Ringen und Stäben besteht. Die Stäbe sind hierbei in Nuten des Metallkerns eingefügt, die in Axialrichtung verlaufen, und sind durch ebenfalls kupferne Kurzschlussringe elektrisch miteinander verbunden. Solche Elektromotoren werden auch zum Verdichten von chemisch aggressiven Prozessgasen der Industrie verwendet, die die Kupferteile angreifen können, wodurch auf Dauer die Funktion dieser Elektromotoren beeinträchtigt wird.

Aus der DE 195 25 704 C1 ist ein Rotor für einen Elektromotor bekannt, bei dem ein Blechpaket mit daran angeordneten elektrisch leitenden Kurzschlussstäben von einem korrosionsfesten Schutzmantel umgeben ist. In EP 1 054 499 A2 wird ein Rotor beschrieben, dessen Ankerblechpaket mit einer Schutzumhüllung versehen ist, die von einem Schrumpfschlauch aus PVC gebildet ist. Ebenso aus DE 10 89 468 B ist es bekannt, einen Läufer eines elektrischen Motors mit einem Schlauch aus durch Erwärmung schrumpfenden Kunststoff zu versehen.

Zum Schutz der empfindlicheren Motorteile ist es aus der WO 2005/124973 A1 bekannt, eine metallische Schutzschicht aus Inconel mittels explosivem Aufschweißens ("explosive cladding"/"detonation cladding") auf den Rotor aufzubringen. Inconel ist eine eingetragene Marke der Special Metals Cooperation, New Hartford, New York, USA. Die Schutzschicht überdeckt die Kupferleiter und schützt diese so vor korrosiven Gasen.

In EP 0 504 994 A2 wird ein Rotor eines eingekapselten Motors beschrieben, bei der eine äußere Fläche einer Rotoranordnung ist mit einem korrosionsresistenten Beschichtungsfilm versehen ist. DE 295 04 640 U1 offenbart einen Rotor eines Spaltrohrmotors mit einem Blechpaket auf das ein Schutzrohr aus Edelstahl aufgeschoben ist.

Es ist eine Aufgabe der vorliegenden Erfindung, ein Verfahren zur Herstellung eines kostengünstig herstellbaren Läufers für einen Elektromotor für den industriellen Bereich anzugeben, der zuverlässig zum Verdichten von chemisch aggressiven Prozessgasen der Industrie verwendbar ist.

Diese Aufgabe wird durch ein Verfahren zur Herstellung eines Läufer der eingangs genannten Art gelöst, bei dem das Befestigen durch heißes isostatisches Verpressen erfolgt, die Korrosionsschutzschicht zumindest ein Teil einer Heißpressverkapselung zum isostatischen Verpressen der Leiter im Metallkern ist, wobei zwischen dem Metallkern und der Korrosionsschutzschicht eine metallische Zwischenschicht aufgebracht wird, von der Material durch heißes isostatisches Verpressen in den Metallkern und die Korrosionsschutzschicht eindiffundiert und diese zusammenhält.

Durch das Legen der Korrosionsschutzschicht als Festkörper um den Metallkern ist es möglich, den Läufer gegenüber einem Aufbringen von Korrosionsschutzmetall aus der flüssigen Phase verhältnismäßig einfach und kostengünstig herzustellen. Eine gleichmäßige, flächige und sehr feste Verbindung der Korrosionsschutzschicht mit zumindest dem Metallkern kann erreicht werden, wenn die Korrosionsschutzschicht durch heißes isostatisches Verpressen mit zumindest dem Metallkern verbunden ist.

Vorteilhafterweise ist die Korrosionsschutzschicht nicht nur am Metallkern, sondern auch an den Leitern befestigt. Der Metallkern kann ein- oder mehrstückig sein und aus einem oder mehreren Metallen bestehen. Der Begriff Metall soll im Folgenden so verstanden werden, dass auch Legierungen und metallische Mischungen darunter zu verstehen sind. Der als Korrosionsschutzschicht aufgebrachte Festkörper kann ein- oder mehrstückig sein, z. B. als zylindrisches Rohr über den Metallkern mit den Leitern geschoben werden oder als zweistückiges Gehäuse auf den Metallkern aufgebracht werden. Das Legen kann ein Auflegen oder Aufstecken, bzw. ganz allgemein alle Möglichkeiten des Anbringens, umfassen.

Die Korrosionsschutzschicht kann in ihrer Geometrie als rohrförmiger Überzug über den Metallkern und die Leiter ausgeführt sein. Sie begrenzt den Spalt zwischen dem Läufer und dem Ständer des Elektromotors. Die Korrosionsschutzschicht kann aus einer beliebigen Legierung bestehen, die sich zu einem dünnwandigen Rohr verarbeiten lässt und die in der zu erwartenden chemisch aggressiven Umgebung beständig ist. Besonders geeignet ist ein hochlegierter nicht rostender Stahl oder eine Nickelbasislegierung, beispielsweise Inconel 625. Eine Nickelbasislegierung besteht hauptsächlich aus Nickel und umfasst zumindest ein weiteres chemisches Element, das zweckmäßigerweise mittels eines Schmelzverfahrens mit dem Nickel verbunden wird.

Die Befestigung der Korrosionsschutzschicht an zumindest dem Metallkern kann durch Anschweißen an einer Naht oder durch Kleben oder Drückwalzen erfolgen. Auch kombinierte Verfahren sind vorteilhaft. Mit dem Anschweißen kann zusätzlich eine zuverlässige Abdichtung der elektrischen Leiter erfolgen. Auch rein mechanische Verfahren, wie Verschrauben sind denkbar.

In einer vorteilhaften Ausführungsform der Erfindung ist die Korrosionsschutzschicht durch Aufschrumpfen mit zumindest dem Metallkern verbunden. Bei einem solchen Kryoformen kann eine mechanisch sehr stabile Verbindung mit dem Metallkern erreicht werden. Vorteilhaft wird hierbei der Festkörper vor dem Aufschrumpfen aufgeweitet, beispielsweise durch Pressluft.

Wie zum Teil oben beschrieben kann eine gleichmäßige, flächige und sehr feste Verbindung der Korrosionsschutzschicht mit dem Metallkern und insbesondere auch den Leitern erreicht werden, wenn die Korrosionsschutzschicht durch heißes isostatisches Verpressen mit dem Metallkern und insbesondere auch den Leitern verbunden ist. Beim heißen isostatischen Pressen (HIP), das auch als eine Art des Diffusionsschweißens angesehen werden kann, werden die elektrischen Leiter und der Teil des Metallkerns, der sie aufnimmt, in einer Heißpressverkapselung, z. B einem Metallblechkanister, eingeschweißt und gasdicht abgeschlossen, ggf. auch evakuiert, sodass das HIP-Prozessgas mit dem entsprechenden Druck auf den Läufer einwirken kann. Durch die Einwirkung der Druckkraft von allen Seiten erfolgt das Pressen isostatisch.

Anschließend wird der Läufer in einer speziellen Anlage, insbesondere einem Autoklav, in Schutzgasatmosphäre einem sehr hohen und allseitig wirkenden Gasdruck ausgesetzt. Zusätzlich wird der Läufer sehr stark erwärmt, insbesondere über die Fließgrenze des Materials der Leiter, und hierbei verdichtet. Hierdurch kann eine stoffschlüssige Verbindung zwischen der Korrosionsschutzschicht und den Leiter und insbesondere auch dem Metallkern erreicht werden.

In einer weiteren vorteilhaften Ausführungsform der Erfindung ist zwischen dem Metallkern und der Korrosionsschutzschicht eine metallische Zwischenschicht angeordnet, von der Material durch heißes isostatisches Verpressen in den Metallkern und die Korrosionsschutzschicht eindiffundiert ist und diese zusammenhält. Der dieser Erfindungsvariante zugrunde liegende Gedanke ist, dass die Fließgrenze des oberflächlichen Materials des Metallkerns üblicherweise in seiner Temperatur so hoch liegt, dass die Leiter, die üblicherweise aus Kupfer oder einer Kupferlegierung hergestellt sind, Schaden nehmen. Durch die Verwendung der Zwischenschicht, beispielsweise einer Nickelschicht oder eine Legierung mit dem Hauptbestandteil Nickel, kann bereits bei einer Temperatur von rund 1000° C ein Verschweißen der Korrosionsschutzschicht mit dem Metallkern durch Materialdiffusion erreicht werden. Das Material der metallischen Zwischenschicht ist hierbei vorteilhafter Weise ein solches Material, das bis zu einer Temperatur von maximal 1050° C ein Diffusionsschweißen von Korrosionsschutzschicht mit dem Metallkern erlaubt.

Eine weitere vorteilhafte Ausführungsform der Erfindung sieht vor, dass die Korrosionsschutzschicht zumindest ein Teil einer Heißpressverkapselung zum isostatischen Verpressen der Leiter im Metallkern ist. Bei dieser Idee findet der Gedanke Berücksichtigung, dass eine mechanisch besonders feste Verbindung zwischen den Leitern und dem Metallkern durch heißes isostatisches Verpressen erreicht werden kann. Hierbei ist, wie oben beschrieben, der mechanische Blechkanister als Heißpressverkapselung sinnvoll, um die hier zu verbindenden Elemente des Läufers vor eindringendem Gas abschirmen zu können, so dass der Gasdruck von außen erhalten bleibt.

Durch das heiße isostatische Verpressen kann nicht nur eine Verbindung zwischen den Leitern und dem Metallkern, sondern auch zwischen der Heißpressverkapselung und dem Metallkern, und zweckmäßigerweise auch den Leitern, erreicht werden. Die Heißpressverkapselung kann als Korrosionsschutzschicht verwendet werden, wenn sie aus einem entsprechenden chemisch beständigen Material hergestellt ist.

Durch die enormen Drücke beim heißen isostatischen Verpressen werden die Leiter ein Stück weit in die sie beherbergenden Nuten des Metallkern eingedrückt, so dass es sein kann, dass der Metallkern über die Leiter hervorsteht. Diese unregelmäßige Oberflächenform wird auf die Heißpressverkapselung übertragen, die sich durch den enormen Druck eng an diese Oberfläche anlegt. Um den Spalt zwischen Läufer und Ständer möglichst gering zu halten zum Erzielen eines hohen Wirkungsgrads der Elektromotors, ist es vorteilhaft, wenn die Heißpressverkapselung nach dem heißen isostatischen Verpressen plan gearbeitet wird, sodass eine kreisförmige, rotationssymmetrische Oberfläche entsteht.

Zum gasdichten Verschließen des durch die Korrosionsschutzschicht gebildeten Innenraums ist es vorteilhaft, wenn die Korrosionsschutzschicht an einem Rand mit einem Element des Metallkerns verschweißt ist.

Isostatisches heißes Verpressen führt unter Umständen zu einem Temperaturverlauf beim Abkühlen, der hinsichtlich der Gefügeveränderungen der metallischen Struktur des Metallkerns ungünstig ist. Daher ist der Metallkern zumindest überwiegend, insbesondere über 90% aus einem Metall gefertigt, dessen Gefüge beim Abkühlen nach einem isostatischen Verpressen seine Festigkeit erhält. Solche Metalle sind jedoch in der Regel schlecht verschweißbar, insbesondere mit einer Nickelbasislegierung. Die Verschweißbarkeit des Materials der Korrosionsschutzschicht mit dem Material des Metallkerns kann verbessert werden, wenn das Element, an dem die Korrosionsschutzschicht angeschweißt ist, in Richtung zur Korrosionsschicht eine metallische Pufferlage umfasst, mit der die Korrosionsschutzschicht verschweißt ist und die sich in ihrer Zusammensetzung von dem darunter liegenden Substrat des Metallkerns unterscheidet.

Die metallische Pufferlage erleichtert das Verschweißen von Korrosionsschutzschicht mit dem Metallkern und kann selbst mit dem Substrat des Metallkerns verschweißt sein.

Eine einfache Herstellung der Korrosionsschutzschicht kann erreicht werden, wenn diese ein metallisches Zylinderohr ist, das an seinen Enden jeweils mit dem Metallkern verbunden ist, zweckmäßigerweise verschweißt ist. Die Korrosionsschutzschicht ist hierbei vorteilhafter Weise ein deckelfreies Zylinderohr, sodass sie einstückig gefertigt sein kann und nicht aus mehreren Teilen zusammengesetzt werden muss.

Vorteilhafterweise sind die Enden jeweils mit einem Abschlussring verbunden, insbesondere mit diesem verschweißt, der die Leiter axial in Position am Metallkern hält. Der Abschlussring kann einstückig aus dem Metallkern herausgearbeitet oder mit dem Metallkern verbunden sein, beispielsweise durch heißes isostatisches Verpressen.

Der Abschlussring kann eine radial nach außen ragende Ausformung des Metallkerns sein und fällt zweckmäßigerweise in beide Axialrichtungen radial nach innen ab. Gegebenenfalls kann ein Kurzschlussring zwischen den Leitern und dem Abschlussring angeordnet sein, wobei dieser dann zweckmäßigerweise mehrstückig ausgeführt ist, um von radial außen auf den Metallkern aufgelegt werden zu können.

Es ist außerdem eine Aufgabe der Erfindung, ein kostengünstiges Verfahren zum Herstellen eines korrosionsbeständigen Läufers für einen Elektromotor anzugeben.

Diese Aufgabe wird durch ein Verfahren der eingangs genannten Art gelöst, bei dem eine metallische Korrosionsschutzschicht als Festkörper um den Metallkern und die Leiter gelegt und zumindest am Metallkern befestigt wird und erfindungsgemäß das Befestigen durch heißes isostatisches Verpressen erfolgt. Auf ein Aufbringen der Korrosionsschutzschicht aus flüssigem Metall kann verzichtet und es kann in einem einfachen Herstellungsverfahren ein hochfestes Metallgefüge der Korrosionsschutzschicht erreicht werden.

Vorteilhafterweise wird eine Heißpresskapsel um den Metallkern und die Leiter gelegt und die Leiter werden mit dem Metallkern isostatisch heiß verpresst, wobei anschließend zumindest ein Teil der Heißpresskapsel als Korrosionsschutzschicht am Läufer verbleibt zum Schutz des Läufers während des Betriebs des Elektromotors. Die Heißpressverkapselung kann somit zwei Funktionen übernehmen, wodurch der Herstellungsprozess einfach gehalten werden kann. Zweckmäßigerweise wird die Korrosionsschutzschicht im Anschluss an den Prozess des Verpressens plan gearbeitet, um eine rotationssymmetrische Oberfläche zu erreichen.

Außerdem ist es vorteilhaft, wenn zwischen die Heißpressverkapselung und den Metallkern eine Zwischenschicht gebracht wird, um die Temperatur des Verpressens bei einem Eintreten der Metalldiffusion gering halten zu können. Die Zwischenschicht kann aus Nickel bestehen, das beispielsweise als Folie oder galvanisch oder chemisch auf die Heißpressverkapselung oder den Metallkern gebracht wird. Das Planarbeiten kann durch ein Abdrehen erfolgen.

Eine weitere vorteilhafte Ausführungsform des erfindungsgemäßen Verfahrens sieht vor, dass die Leiter mit dem Metallkern isostatisch heiß verpresst werden und die radial äußere Oberfläche des Läufers anschließend plan gearbeitet wird, dann die Korrosionsschutzschicht auf die Planfläche aufgebracht wird und an dieser befestigt wird. Wie oben erläutert erfolgt das Befestigen zweckmäßigerweise durch heißes isostatisches Verpressen, insbesondere unter Verwendung der Zwischenschicht.

Die Erfindung wird anhand von Ausführungsbeispielen näher erläutert, die in den Zeichnungen dargestellt sind.

### Es zeigen:

- FIG 1: einen Längsschnitt durch einen Läufer eines 10 MW-Elektromotors zum Betrieb eines Turboverdichters,
- FIG 2: einen Querschnitt durch den Läufer entlang der Linie II-II,
- FIG 3: einen Ausschnitt des Läufers aus FIG 1 mit abgenommener Heißpressverkapselung,
- FIG 4: der Ausschnitt aus FIG 3 mit einer aufgebrachten Korrosionsschutzschicht,
- FIG 5: die Korrosionsschutzschicht aus FIG 4 in ihrer zum Betrieb fertigen Form und
- FIG 6: eine Längsschnitt durch einen weiteren Läufer eines 15 MW Elektromotors.

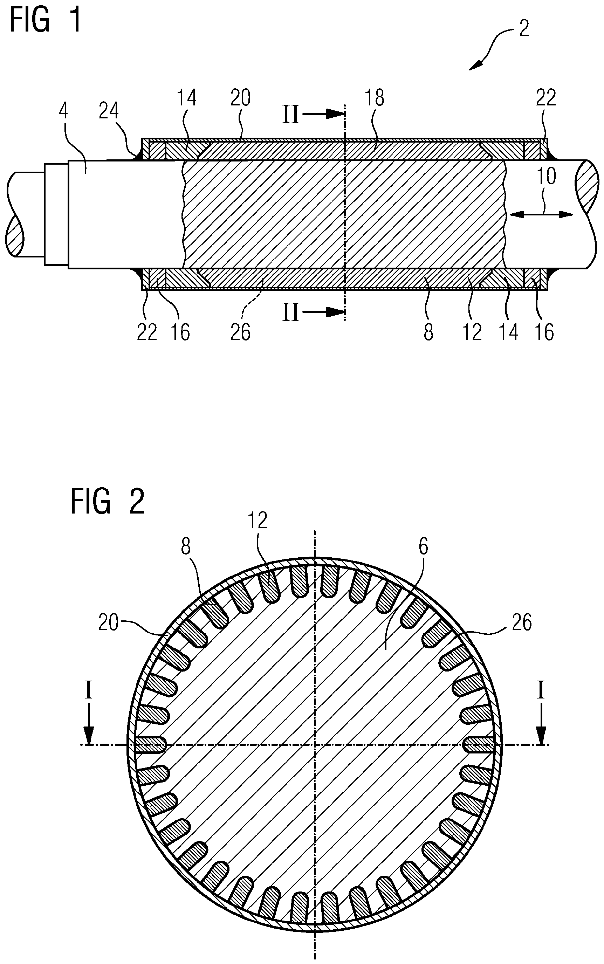

FIG 1 zeigt einen Ausschnitt eines Läufers für einen 10-MW-Elektromotor für einen Turbokompressor zum Verdichten von chemisch aggressiven Prozessgasen in einem industriellen Fertigungsprozess. Der Kompressor ist ein Radialkompressor und für eine Laufgeschwindigkeit von zumindest 14.000 U/min ausgelegt. Der Läufer umfasst eine Welle 4, die in FIG 2 in einem Querschnitt dargestellt ist und die zugleich einen Metallkern 6 des Läufers 2 bildet.

In den einstückig ausgeführten und im Wesentlichen zylindrischen Metallkern 6 sind in einem mittleren Abschnitt 18 eine Vielzahl von Nuten 8 eingebracht, die sich parallel zu den Axialrichtungen 10 des Läufers 2 erstrecken. In die Nuten 8 sind jeweils elektrische Leiter 12 in Form von geraden Kupferstäben eingelegt, die an ihren axialen Enden jeweils durch Kurzschlussringe 14 elektrisch miteinander verbunden sind. Abschlussringe 16 halten die Kurzschlussringe 14 und die axial verlaufenden Leiter 12 in ihrer axialen Position am Metallkern 6.

Um den mittleren Abschnitt 18 des Metallkern 6, die elektrischen Leiter 12 sowie die Kurzschlussringe 14 und Abschlussringe 16 ist eine Heißpressverkapselung 20 in Form eines metallischen Zylinders gelegt, der an seinen beiden axialen Enden jeweils einen Deckel 22 trägt. Der Deckel 22 ist mit der Welle 4 bzw. dem Metallkern 6 verschweißt, wie durch zwei Kehlnähte 24 angedeutet ist. Außerdem sind die Deckel 22 mit dem zylindrischen Teil der Heißpressverkapselung 20 verschweißt, was der Übersichtlichkeit halber in FIG 1 nicht dargestellt ist. Durch diese Verschweißungen schließt die Heißpressverkapselung 20 den Metallkern 6 im Bereich der Leiter 12 gasdicht von der Umgebung ab.

Bei einem Herstellungsprozess des Läufers 2 wird dieser in einen Autoklav gebracht und bei einem hohen Druck und bei Temperaturen über 1000° C heiß isostatisch gepresst. Die Leiter 12 werden hierbei mittels einer Zwischenschicht, die zwischen ihnen und dem Metallkern 6 in den Nuten 8 angeordnet ist, durch Diffusionsschweißen miteinander verbunden, sodass die Leiter 12 im Metallkern 6 fest gelagert sind. Die Leiter 12 werden durch den hohen Druck ein Stück weit in die Nuten 8 eingepresst, sodass die Nuten 8 kleine Täler zwischen Stegen 26 des Metallkerns 6 bilden, in die auch die Heißpressverkapselung 20 eingedrückt wird, sodass ihr zylinderförmiger Teil etwas aus der Rotationssymmetrie heraus verformt wird.

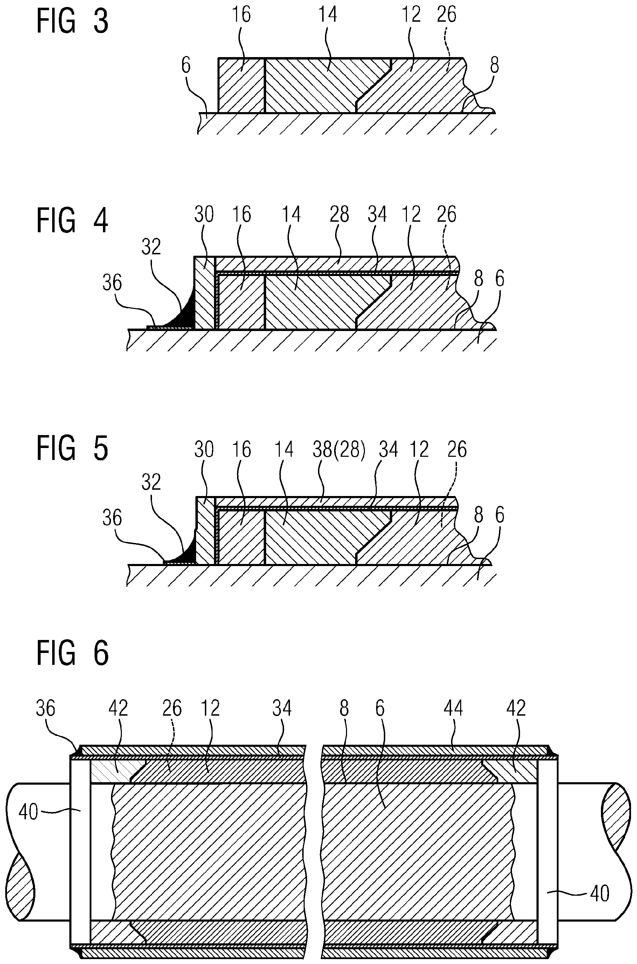

Ein nächster Verfahrensschritt ist anhand der schematischen Darstellung aus FIG 3 erläutert. Die Heißpressverkapselung 20 ist inklusive der Deckel 22 und Kehlnähte 24 abgedreht und hierdurch vollständig entfernt und der Metallkern 6, die Leiter 12, die Kurzschlussringe 14 und die Abschlussringe 16 sind auf radiales Fertigungsmaß abgedreht und hierdurch plan gearbeitet. Das Kupfer der Leiter 12 liegt hierdurch radial nach außen frei.

Der nächste Verfahrensschritt ist anhand der Skizze aus FIG 4 dargestellt. Eine neue Heißpressverkapselung 28 schließt mit ihren Deckeln 30 und Kehlnähten 32 die Stege 26, Leiter 12, Kurzschlussringe 14 und stählernen Abschlussringe 16 gasdicht nach außen ab. Außerdem ist zwischen der Heißpressverkapselung 28 und den Leitern 12 und Stegen 26 eine Zwischenschicht 34, beispielsweise aus Nickel, angeordnet, die einem anschließenden heißen isostatischen Verpressen sowohl in die Heißpressverkapselung 28 als auch in die Leiter 12 und Stege 26 eindringt und die Elemente im Sinne eines Diffusionsschweißens fest miteinander verbindet. Im Gegensatz zur ersten Heißpressverkapselung 20 ist die zweite Heißpressverkapselung 28 aus dem Metall Inconel 625 hergestellt. Wie oben dargestellt, werden unter dem Begriff "Metall" auch metallische Legierungen verstanden.

Außerdem ist eine metallische Pufferlage 36 auf den Metallkern 6 aufgeschweißt, die aus einem Metall ist, das auf den Metallkern 6 mit vertretbarem Aufwand aufschweißbar ist. Die beiden Pufferlagen 36 sind beidseitig der Heißpressverkapselung 28 angeordnet, sodass beide Deckel 30 über die beiden Pufferlagen 36 und die Kehlnähte 32 mit dem Metallkern durch Verschweißen verbunden sind. Die Pufferlagen 36 können bereits zum Anbringen der Kehlnähte 24 vorgesehen sein.

Nach dem anschließenden Verfahrensschritt des heißen isostatischen Verpressens, bei dem die Heißpressverkapselung 28 wiederum als gasdichte Abschirmung zum Aufbau des Anpressdrucks auf den Metallkern 6 dient, wird die Heißpressverkapselung 28, wie in FIG 5 dargestellt ist, auf Endmaß abgedreht und somit plan gearbeitet. Sie verschließt nun den Metallkern 6 im Bereich der Leiter 12, der Kurzschlussringe 14 und der Abschlussringe 16 vollständig von der Außenumgebung, sodass die Leiter 12 wirkungsvoll gegen chemische Prozessgase geschützt sind. Die Heißpressverkapselung 28 bildet nun eine Korrosionsschutzschicht 38 um die Leiter 12. Durch das Verschweißen am Metallkern 6 und das Diffusionsschweißen an den Stegen 26 und den Leitern 12 liegt ein mechanisch extrem festes Gefüge vor, das auch die hohen Umdrehungen von bis zu 16.000 Umdrehungen/Min. und einer Rotationsgeschwindigkeit von bis zu 300 m/Sek. standhält.

Ein weiteres Ausführungsbeispiel ist anhand der schematischen Darstellung aus FIG 6 dargestellt. Die nachfolgende Beschreibung beschränkt sich im Wesentlichen auf die Unterschiede zum Ausführungsbeispiel aus den vorhergehenden Figuren, auf das bezüglich gleich bleibender Merkmale und Funktionen verwiesen wird. Im Wesentlichen gleich bleibende Bauteile sind grundsätzlich mit den gleichen Bezugszeichen beziffert und nicht erwähnte Merkmale sind in das folgende Ausführungsbeispiel übernommen, ohne dass sie erneut beschrieben sind.

Aus dem Metallkern 6 sind Abschlussringe 40 einstückig herausgearbeitet als radiale Ausformungen, die in beide Axialrichtungen 10 radial nach innen abfallen. Hierdurch bilden sie axiale Begrenzungen für Kurzschlussringe 42, die zweistückig, also als Halbringe, ausgeführt sind und um den Metallkern 6 gelegt sind. Die Leiter 12 sind zwischen die Stege 26 eingefügt, insbesondere mit einer Zwischenschicht, und um die Leiter 12 und die Stege 26 ist eine Korrosionsschutzschicht 44 gelegt, die aus einer Nickelbasislegierung hergestellt ist und eine Zylinderform ohne Deckel aufweist. An ihren axialen Enden ist die Korrosionsschutzschicht 44 mit den Abschlussringen 40, also dem Metallkern 6 selbst, verschweißt, wobei hierbei wieder Pufferlagen 36 vorteilhaft sind. Eine Zwischenschicht 34 erleichtert das isostatische heiße Verpressen, da durch diese, wie beim vorangegangenen Ausführungsbeispiel, bereits bei einer Temperatur, die unter der Fließgrenze des Metalls des Metallkerns 6 liegt, ein Diffusionsverschweißen zwischen der Korrosionsschutzschicht 44 und dem Metallkern 6 stattfinden kann.

In einem einzigen Verfahrensschritt des heißen isostatischen Verpressens werden nun die Leiter 12 mit dem Metallkern 6 und die Korrosionsschutzschicht 44 mit dem Metallkern 6 und den Leitern 12 miteinander mechanisch fest verbunden. Alternativ ist es möglich, die Verbindung in zwei getrennten Verfahrensschritten vorzunehmen, wobei zunächst die Leiter 12 mit dem Metallkern 6 unter Zuhilfenahme einer Heißpressverkapselung 20 verbunden werden, anschließend die Heißpressverkapselung 20 wie beim vorhergehenden Ausführungsbeispiel entfernt und die Stege 26 und Leiter 12 plan gearbeitet werden und als folgender Schritt die Korrosionsschutzschicht 44 auf Leiter 12 und Stege 26 aufgebracht und mit diesen verbunden wird.

## Patentansprüche

1. Verfahren zum Herstellen eines Läufers (2) für einen Elektromotor mit einem Metallkern (6) und daran angeordneten elektrischen Leitern (12), bei dem eine metallische Korrosionsschutzschicht (38, 44) als Festkörper um den Metallkern (6) und die Leiter (12) gelegt und zumindest am Metallkern (6) befestigt wird,
**dadurch gekennzeichnet, dass**
das Befestigen durch heißes isostatisches Verpressen erfolgt, dass die Korrosionsschutzschicht (44) zumindest ein Teil einer Heißpressverkapselung zum isostatischen Verpressen der Leiter (12) im Metallkern (6) ist,
wobei zwischen dem Metallkern (6) und der Korrosionsschutzschicht (38, 44) eine metallische Zwischenschicht (34) aufgebracht wird, von der Material durch heißes isostatisches Verpressen in den Metallkern (6) und die Korrosionsschutzschicht (38, 44) eindiffundiert und diese zusammenhält.

2. Verfahren nach Anspruch 1,
**dadurch gekennzeichnet, dass** eine Heißpressverkapselung (28) um den Metallkern (6) und die Leiter gelegt wird und die Leiter mit dem Metallkern (6) isostatisch heiß verpresst werden und zumindest ein Teil der Heißpressverkapselung (20) als Korrosionsschutzschicht (20) am Läufer (2) verbleibt zum Schutz des Läufers (2) während des Betriebs des Elektromotors.

3. Verfahren nach Anspruch 1 oder 2,
**dadurch gekennzeichnet, dass** die Leiter (12) mit dem Metallkern (6) isostatisch heiß verpresst werden und die radial äußere Oberfläche des Läufers (2) anschließend plan gearbeitet wird, dann die Korrosionsschutzschicht (38) auf die Planfläche aufgebracht wird und an der Planfläche befestigt wird.

4. Verfahren nach einem der vorhergehenden Ansprüche,
**dadurch gekennzeichnet, dass** die Korrosionsschutzschicht (38, 44) an einem Rand mit einem Element des Metallkerns (6) verschweißt wird.

5. Verfahren nach Anspruch 4,
**dadurch gekennzeichnet, dass** das Element in Richtung zur Korrosionsschutzschicht (38, 44) mit einer metallischen Pufferlage (36) versehen wird, mit der die Korrosionsschutzschicht (38, 44) verschweißt wird und die sich in ihrer Zusammensetzung von dem darunter liegenden Substrat des Metallkerns (6) unterscheidet.

6. Verfahren nach einem der vorhergehenden Ansprüche,
**dadurch gekennzeichnet, dass** die Korrosionsschutzschicht (44) ein metallisches Zylinderrohr ist, das an seinen Enden jeweils mit dem Metallkern (6) verbunden wird.

7. Verfahren nach Anspruch 6,
**dadurch gekennzeichnet, dass** die Enden jeweils mit einem Abschlussring (16) verbunden werden, der die Leiter (12) axial in Position am Metallkern (6) hält.

8. Verfahren nach Anspruch 6 oder 7,
**dadurch gekennzeichnet, dass** die Enden jeweils mit einer radial nach außen ragenden Ausformung des Metallkerns (6) gasdicht verbunden werden.

9. Verfahren nach Anspruch 8,
**dadurch gekennzeichnet, dass** die Ausformung ein Abschlussring (16) ist, der die Leiter (12) axial in Position am Metallkern (6) hält.

## Claims

1. Method for producing a rotor (2) for an electric motor, comprising a metal core (6) and electrical conductors (12) arranged thereon, in which a metallic corrosion protection layer (38, 44) is laid as a solid body around the metal core (6) and the conductors (12) and is fastened at least to the metal core (6),
**characterized in that**
the fastening is carried out by hot isostatic pressing, **in that** the corrosion protection layer (44) is at least a part of a hot-pressing containment for isostatic pressing of the conductors (12) in the metal core (6), wherein between the metal core (6) and the corrosion protection layer (38, 44) there is a metallic interlayer (34) which is applied diffused from the material by hot isostatic pressing into the metal core (6) and the corrosion protection layer (38, 44) and holds them together.

2. Method according to Claim 1,
**characterized in that** a hot-pressing containment (28) is laid around the metal core (6) and the conductors and the conductors are isostatically hot-pressed with the metal core (6), and at least a part of the hot-pressing containment (20) remains as a corrosion protection layer (20) on the rotor (2) in order to protect the rotor (2) during operation of the electric motor.

3. Method according to Claim 1 or 2,
**characterized in that** the conductors (12) are isostatically hot-pressed with the metal core (6) and the radially outer surface of the rotor (2) is subsequently machined flat, then the corrosion protection layer (38) is applied onto the plane surface and fastened to the plane surface.

4. Method according to one of the preceding claims,
**characterized in that** the corrosion protection layer (38, 44) is welded to an element of the metal core (6) on one edge.

5. Method according to Claim 4,
**characterized in that** the element is provided, in the direction toward the corrosion protection layer (38, 44), with a metallic buffer layer (36) to which the corrosion protection layer (38, 44) is welded and which differs in its composition from the underlying substrate of the metal core (6).

6. Method according to one of the preceding claims,
**characterized in that** the corrosion protection layer (44) is a cylindrical metal tube which is respectively connected to the metal core (6) at its ends.

7. Method according to Claim 6,
**characterized in that** the ends are respectively connected to a termination ring (16) which holds the conductors (12) axially in position on the metal core (6).

8. Method according to Claim 6 or 7,
**characterized in that** the ends are respectively connected gastightly to an extension of the metal core (6) extending radially outward.

9. Method according to Claim 8,
**characterized in that** the extension is a termination ring (16) which holds the conductors (12) axially in position on the metal core (6).

## Revendications

1. Procédé de fabrication d'un rotor (2) pour un moteur électrique, ayant un noyau (6) métallique et des conducteurs (12) électriques, qui y sont disposés, dans lequel on met une couche (38, 44) métallique d'anticorrosion sous la forme d'un corps solide autour du noyau (6) métallique et des conducteurs (12) et on la fixe au moins au noyau (6) métallique,
**caractérisé en ce que**
la fixation s'effectue par compression isostatique à chaud, **en ce que** la couche (44) d'anticorrosion est au moins une partie d'un enrobage de pressage à chaud pour la compression isostatique des conducteurs (12) dans le noyau (6) métallique,
dans lequel on dépose, entre le noyau (6) métallique et la couche (38, 44) d'anticorrosion, une couche (34) métallique intermédiaire, de laquelle de la matière diffuse, par compression isostatique à chaud, dans le noyau (6) métallique et dans la couche (38, 44) d'anticorrosion et les maintient ensemble.

2. Procédé suivant la revendication 1,
**caractérisé en ce que** l'on met un enrobage (28) de pressage à chaud autour du noyau (6) métallique et des conducteurs et l'on comprime isostatiquement à chaud les conducteurs avec le noyau (6) métallique et au moins une partie de l'enrobage (20) de pressage à chaud reste sur le rotor (2) comme couche (20) d'anticorrosion, afin de protéger le rotor (2) pendant le fonctionnement du moteur électrique.

3. Procédé suivant la revendication 1 ou 2,
**caractérisé en ce que** l'on comprime isostatiquement à chaud les conducteurs (12) avec le noyau (6) métallique et on usine ensuite, de manière à la rendre plane, la surface extérieure radialement du rotor (2), puis on dépose la couche (38) d'anticorrosion sur la surface plane et on la fixe à la surface plane.

4. Procédé suivant l'une des revendications précédentes,
**caractérisé en ce que** l'on soude la couche (38, 44) d'anticorrosion sur un bord à un élément du noyau (6) métallique.

5. Procédé suivant la revendication 4,
**caractérisé en ce que** l'élément est pourvu, dans la direction de la couche (38, 44) d'anticorrosion, d'une couche (36) métallique tampon, à laquelle la couche (38, 44) d'anticorrosion est soudée et qui se distingue par sa composition du substrat sous-jacent du noyau (6) métallique.

6. Procédé suivant l'une des revendications précédentes,
**caractérisé en ce que** la couche (44) d'anticorrosion est un tuyau métallique cylindrique, qui est relié à ses extrémités respectivement au noyau (6) métallique.

7. Procédé suivant la revendication 6,
**caractérisé en ce que** l'on relie les extrémités chacune à un anneau (16) de fermeture, qui maintient les conducteurs (12) axialement en position sur le noyau (6) métallique.

8. Procédé suivant la revendication 6 ou 7,
**caractérisé en ce que** l'on relie d'une manière étanche au gaz les extrémités chacune à une conformation faisant saillie vers l'extérieur radialement du noyau (6) métallique.

9. Procédé suivant la revendication 8,
**caractérisé en ce que** la conformation est un anneau (6) de fermeture, qui maintient les conducteurs (12) axialement en position sur le noyau (6) métallique.
